# EUROPÄISCHE PATENTSCHRIFT

(11) **EP 1 504 213 B1**
(45) Veröffentlichungstag und Bekanntmachung des Hinweises auf die Patenterteilung: **26.12.2007**
(21) Anmeldenummer: 03735286.1
(22) Anmeldetag: 07.05.2003
(51) Int. Cl.: F16L 55/04

(54) **DÄMPFER FÜR HYDRAULIKSYSTEME**
DAMPER FOR HYDRAULIC SYSTEMS
AMORTISSEUR POUR SYSTEMES HYDRAULIQUES

(30) Priorität: 14.05.2002 DE 10221277
(43) Veröffentlichungstag der Anmeldung: 09.02.2005
(73) Patentinhaber: Eaton Fluid Power GmbH, 76532 Baden-Baden (DE)
(72) Erfinder: ZIMPFER, Michael, 76275 Ettlingen (DE); MERKEL, Ralph, Peter, 76571 Gaggenau (DE); HILGERT, Andreas, Richard, 76547 Sinzheim (DE)
(74) Vertreter: Rüger, Barthelt & Abel Patentanwälte
(86) Internationale Anmeldenummer: PCT/DE2003/001454
(87) Internationale Veröffentlichungsnummer: WO 2003/095886

(56) Entgegenhaltungen:
- DE-A- 3 510 267
- US-A- 3 323 305
- US-B1- 6 279 613

## Beschreibung

Die Erfindung betrifft eine Dämpfungseinrichtung für die Dämpfung von Schwingungen und Pulsationen in Fluidsystemen, insbesondere in hydraulischen Systemen.

Für Hydrauliksysteme sind Dämpfungseinrichtungen bekannt, die beispielsweise zur Dämpfung von Schwingungen und Pulsationen dienen, die von der Antriebsquelle herrühren können. Sie dienen zum Abbau von Schall, Pulsationen und Druckspitzen. Solche Dämpfungseinrichtungen weisen einen Eingang und einen Ausgang auf, mit dem sie in ein Hydrauliksystem eingefügt werden. Sie werden von dem Hydraulikfluid durchflossen.

Pulsationen, Druckspitzen und ähnliche in Hydrauliksystemen auftretende Druckschwankungen weisen ein Spektrum auf, das auch niederfrequente Anteile enthalten kann. Zur Dämpfung derselben sind Dämpfungseinrichtungen bekannt.

Aus DE 35 10 267 A1 ist ein Zuleitungsschlauchsatz zur Dämpfung von Druckpulsationen in einem Fluid bekannt, der ein äußeres biegsames Schlauchelement aus einem elastomeren Material zur Verbindung zweier Anschlussstücke und ein inneres biegsames Schlauchelement mit geschlossener Wand aus einem polymeren Kunstharz aufweist, das an seinem einen Ende an einem der Anschlussstücke befestigt ist und zwischen seinem anderen Ende und dem anderen Anschlussstück eine Leerkammer freilässt. Die Dämpfungswirkung entsteht durch Interferenzen in der Leerkammer zwischen den sich im inneren Schlauchelement fortbewegenden Wellen mit den in den ringförmigen Zwischenraum zwischen dem inneren und äußeren Schlauchelement eintretenden und am Ende des Zwischenraums reflektierten Wellen.

US 6 279 613 offenbart eine Vorrichtung zum Dämpfen von Druckstößen in einer unter Druck stehenden Flüssigkeit durch Interferenz. Die Vorrichtung enthält zwei Anschlussstücke, die durch ein äußeres Schlauchelement miteinander verbunden sind, und ein inneres Leitungselement, das an mindestens einem Ende mit einem der Anschlussstücke verbunden ist. Durch ein freies Ende des inneren Leitungselements mit geschlossener Wand strömt Flüssigkeit aus dem Leitungselement in einen schmalen Ringraum zwischen dem Schlauchelement und dem Leitungselement hinein und aus diesem heraus.

Die Erfindung hat sich zur Aufgabe gemacht, eine Dämpfungseinrichtung zu schaffen, die bei geringem Bauraum eine gute Pulsationsdämpfung, insbesondere auch im niedrigen Frequenzbereich schafft.

Diese Aufgabe wird mit der Dämpfungseinrichtung nach Anspruch 1 gelöst:

Die erfindungsgemäße Dämpfungseinrichtung weist ein Dämpfergefäß auf, in dem ein gegen die Strömungsrichtung freitragend in den Innenraum ragendes Dämpferrohr angeordnet ist. Das Dämpferrohr weist eine geschlossene Wandung auf, d.h. es ist frei von Bohrungen oder Durchbrüchen. Dadurch ist eine Druck undurchlässige Resonatorwand gebildet. In den Innenraum einlaufende Druckstöße laufen als Druckwelle zwischen die äußere Wandung des Dämpfergefäßes und das Dämpferrohr. In diesem Innenraum werden sie gedämpft. Sie gelangen nur in geringem Maße zu dem Ausgangsanschluss. In dem Ringraum zwischen dem Dämpferrohr und der Wandung des Dämpfergefäßes werden sie sowohl reflektiert als auch gedämpft.

Die erfindungsgemäße Dämpfungseinrichtung erbringt eine gute Dämpfung insbesondere im niedrigen Frequenzbereich, sowie eine gute hydraulische Pulsationsdämpfung. Dabei ist die Dämpfungseinrichtung funktionssicher und benötigt lediglich einen geringen Bauraum.

Das Dämpfergefäß ist ein rohrförmiger Körper, der vorzugsweise als Zylinderrohr ausgebildet ist. Das Zylinderrohr umschließt einen Innenraum, der bis auf das Dämpferrohr frei von jeglichen Einbauten, d.h. Halterungen, Strömungskörpern oder dergleichen ist. Vorzugsweise ist das Dämpferrohr als Dehnschlauch ausgebildet, d.h. es besteht vorzugsweise aus einem elastischen oder dehnbaren Material. Es kann ein Kunststoffmaterial oder ein Elastomermaterial Anwendung finden. Vorzugsweise weist dieses Material auch eine innere Dämpfung auf, so dass einlaufende Schall- oder Druckwellen zumindest teilweise dissipativ gedämpft werden.

An den Enden des Dämpfergefäßes sind vorzugsweise Anschlussstücke vorgesehen, die beispielsweise durch ringförmige Rippen mit Sägezahnprofil an der inneren Wandung des Dehnschlauchs verankert sein können. Außen über das Dämpfergefäß, d.h. dem Dehnschlauch greifende Kappen oder Hülsen beispielsweise Quetschhülsen, sichern dabei das Anschlussstück, so dass es auch von Druckstößen nicht aus dem Dämpfergefäß heraus getrieben werden kann.

Bei einer vereinfachten Bauform sind beide Anschlussstücke untereinander gleich ausgebildet. Sie können allerdings Markierungen oder sonstige Zeichen oder Unterschiede enthalten, um den Eingang von dem Ausgang der Dämpfungseinrichtung unterscheiden zu können.

Bei einer bevorzugten Ausführungsform weist zumindest-das ausgangsseitig angeordnete Anschlussstück einen Sitz auf, an dem das Dämpferrohr befestigt ist. Dieses ragt von diesem Sitz ausgehend dann freitragend in den Innenraum des Dämpfergefäßes, wobei es vorzugsweise konzentrisch zu diesem gehalten ist. Es bildet sich somit eine ringförmige Sackgasse zwischen dem Dämpferrohr und dem Dämpfergefäß, in der die Schallwellen und hydraulischen Druckpulsationen reflektiert und gedämpft werden.

Die freitragende Anordnung des Dämpferrohrs hat den Vorteil, dass in der genannten Sackgasse Reflexionen der Schallwelle erst an deren Ende auftreten. Falls dies gewünscht ist, können in dieser ringförmigen Sackgasse jedoch auch zusätzliche Elemente angeordnet werden, um gezielte Schallreflexionen hervorzurufen.

Das Dämpferrohr weist ein offenes Ende zur Aufnahme des abfließenden Fluids auf, das dem Eingangsanschluss gegenüber liegend, d.h. koaxial fluchtend zu diesem, angeordnet ist. Dies ergibt einen geringen Strömungswiderstand. Als zweckmäßiger Anhaltspunkt für die Bemessung kann dienen, dass der Abstand zwischen dem Ende des Dämpferrohrs und der Mündung des Eingangsanschlusses in den Innenraum etwa dem Durchmesser des Dämpfergefäßes entspricht.

Das Dämpferrohr ist flexibel, d.h. etwas biegbar ausgebildet, wobei es in Radialrichtung möglichst steif ist. Seine radiale Elastizität ist geringer als die radiale Elastizität des Dämpfergefäßes. Dazu kann das Dämpferrohr als Kunststoffrohr ausgebildet sein, wobei es durch eine Stützstruktur ausgesteift ist. Diese kann in das Dämpferrohr eingebettet sein. Beispielsweise kann als Stützstruktur eine Metallspirale, beispielsweise eine Flachbandspirale vorgesehen sein, die mit Kunststoff, beispielsweise PTFE, beschichtet ist. Der Kunststoff kann außerdem aufextrodiert oder aufgeschrumpft sein. Andere gegen die verwendeten Medien und bei den vorhandenen Temperaturen beständigen Kunststoffe können ebenfalls vorgesehen sein. Diese dienen in erster Linie dazu, die spiralförmige Flachbandstruktur medienundurchlässig zu machen. Damit kann das Medium nur noch durch das offene Ende des als Resonator dienenden Dämpferrohrs transportiert werden.

Weitere Einzelheiten vorteilhafter Ausführungsformen der Erfindung sind Gegenstand der Zeichnung, der Beschreibung oder von Unteransprüchen. Es zeigen:
- Figur 1: eine erfindungsgemäße Dämpfungseinrichtung in längs geschnittener, vereinfachter Darstellung,
- Figur 2: die Dämpfungseinrichtung nach Figur 1 in einer ausschnittsweisen längs geschnittenen Darstellung,
- Figur 3: eine abgewandelte Ausführungsform der Dämpfungsein richtung in ausschnittsweiser, längs geschnittener Darstellung und
- Figur 4: eine weitere abgewandelte Ausführungsform der Dämpfungseinrichtung in längs geschnittener, vereinfachter Darstellung.

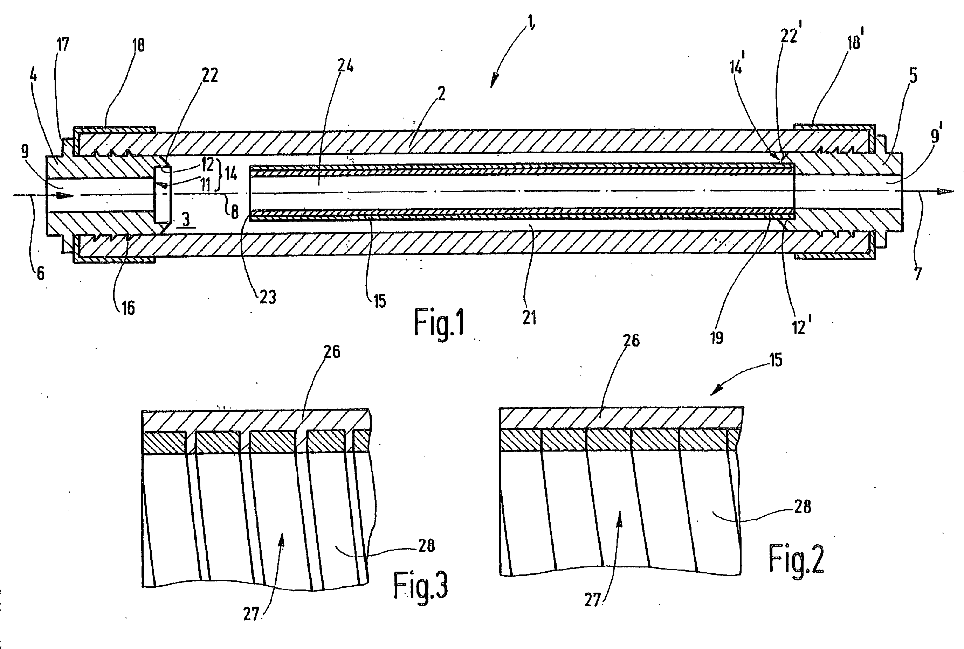

In Figur 1 ist eine Dämpfungseinrichtung 1 veranschaulicht, die zum Einbau in ein Hydrauliksystem vorgesehen ist. Eine solche Dämpfungseinrichtung 1 wird in der Praxis auch als Tuner oder Resonator bezeichnet. Die Dämpfungseinrichtung 1 dient beispielsweise in einem Hydrauliksystem zur Pulsations- und Schalldämpfung und ist beispielsweise zwischen einer Hydraulikpumpe und einer hydraulischen Last, beispielsweise einer hydraulischen Lenkhilfeeinrichtung, angeordnet.

Die Dämpfungseinrichtung 1 weist ein Dämpfergefäß 2 auf, das beispielsweise durch einen Abschnitt eines Dehnschlauchs gebildet ist. Dieser kann ein gewebeverstärker Gummischlauch oder ähnliches sein. Dieser Schlauch hat eine gewisse Elastizität in Radialrichtung und/oder in Axialrichtung. Das Dämpfergefäß 2 umgibt einen etwa zylindrischen Innenraum 3, der an beiden Stirnseiten durch Anschlussstücke 4, 5 abgeschlossen ist. Beide Anschlussstücke 4, 5 sind untereinander gleich ausgebildet. Das Anschlussstück 4 bildet den Eingangsanschluss während das Anschlussstück 5 den Ausgangsanschluss bildet. Entsprechend symbolisieren Pfeile 6, 7 die Strömungsrichtung, in der die Dämpfungseinrichtung 1 durchströmt wird. Nachfolgend wird das Anschlussstück 4 beschrieben. Das Anschlussstück 5 erhält für seine Einzelheiten die gleichen Bezugszeichen (zur Unterscheidung mit einem Apostroph versehen), wobei die Beschreibung entsprechend gilt.

Das Anschlussstück 4 weist eine koaxial zu einer Längsmittelachse 8 des Dämpfergefäßes 2 angeordnete Durchgangsbohrung 9 auf, die den Eingang bzw. den Ausgang (Durchgangsbohrung 9') der Dämpfungseinrichtung 1 bildet. An dem Anschlussstück 4 sind nicht weiter veranschaulichte Mittel zum Anschluss einer Hydraulikleitung vorgesehen. Dieses können Innen- oder Außengewinde oder andere Anschlussmittel sein. An dem in dem Innenraum 3 befindlichen Ende des Anschlussstücks 4 erweitert sich die Durchgangsbohrung 9 in einer Stufe 11 zu einem größeren Durchmesser, der von einer zylindrischen, koaxial zu der Längsmittelachse 8 angeordneten Wandung 12 festgelegt wird. Die Stufe 11 und die Wandung 12 bilden einen Sitz 14 für ein Dämpferrohr 15.

An der zylindrischen Außenseite des Anschlussstücks 4 sind ein oder mehrere ringförmige oder nach Art eines Gewindes schraubenförmig angeordnete Rippen 16 ausgebildet, die einen dreieckförmigen Querschnitt aufweisen. Sie dienen zur Verankerung des Anschlussstücks 4 an der inneren Wandung des Dämpfergefäßes 2. Außerdem weist das Anschlussstück 4 einen ringförmigen, in Radialrichtung fortstrebenden Flansch 17 auf, der beim Einschieben des Anschlussstücks 4 in das offene Ende des Dämpfergefäßes 2 einen Begrenzungsanschlag bildet. Zwischen dem Flansch 17 und dem stirnseitigen Ende des Dämpfergefäßes 2 ist eine Abschlusskappe 18 angeordnet, die sich mit einem buchsenförmigen Abschnitt über die Außenseite des Dämpfergefäßes etwa so weit erstreckt, wie das Anschlussstück 4 reicht. Die Abschlusskappe 18 kann mit dem Dämpfergefäß 2 verpresst sein, um den festen Sitz des Anschlussstücks 4 zu sichern.

Das Dämpferrohr 15 ist an einem Ende 19 an dem Sitz 14' des ausgangsseitigen Anschlussstücks 5 gehalten. Dazu sitzt das Ende 19 im Presssitz in dem von der Wandung 12' umschlossenen Innenraum. Das Dämpferrohr 15 ragt somit freitragend in den Innenraum 3, wobei es mit der inneren Wandung des Dämpfergefäßes 2 einen ringförmigen Dämpferraum 21 festlegt. Dieser ist frei von Einbauten und Elementen und insoweit leer. Stirnseitig ist er durch eine z.B. konische Ringfläche 22' des Anschlussstücks 5 abgeschlossen. Die Neigung dieser Ringfläche 22' zu der Längsmittelachse 8 beträgt vorzugsweise ungefähr 45°. Sie wirkt damit als Einführhilfe beim Einführen des Anschlussstücks 5 in den das Dämpfergefäß 2 bildenden Schlauch.

Die Länge des Dämpferrohrs 15 ist vorzugsweise so bemessen, dass sein freies offenes Ende 23 in einem Abstand zu dem Anschlussstück 4 steht, der allenfalls geringfügig größer ist als der Innendurchmesser des Dämpfergefäßes 2. Sein Durchgangskanal 24 stimmt im Durchmesser mit der Durchgangsbohrung 9, 9' überein. Das stirnseitige Ende des Dämpferrohrs 15 wird durch eine ebene Ringfläche gebildet.

Das Dämpferrohr 15 ist beispielsweise gemäß Figur 2 aufgebaut. Es weist eine geschlossene Wandung auf, die durch einen Kunststoffkörper 26 gebildet ist. Dieser besteht beispielsweise aus PTFE oder einem anderen Kunststoff, der ausreichend temperaturbeständig sowie beständig gegen das die Dämpfungseinrichtung 1 durchfließende Medium ist. Der Kunststoffkörper 26 ist mittels einer Stützstruktur 27 radial ausgesteift. Die Stützstruktur wird beispielsweise durch ein schraubenförmig aufgewickeltes Metallband 28 gebildet. Dieses kann so gewickelt sein, dass die einzelnen Windungen lückenlos aneinander grenzen. Wie Figur 2 veranschaulicht, ist auf diese Stützstruktur 27 der Kunststoffkörper 26 außen aufgebracht. Er kann beispielsweise durch einen aufgeschrumpften Schlauch oder eine sonstwie aufgebrachte Kunststoffbeschichtung gebildet sein. Durch die Stützstruktur ist das Dämpferrohr 15 nach innen steif während das Dämpfergefäß nach außen etwas nachgiebig ist.

Alternativ kann die Stützstruktur 27 wenigstens teilweise in den Kunststoffkörper 26 eingebettet sein, wie Figur 3 veranschaulicht. Die einzelnen Windungen des Metallbands schließen hier miteinander Lücken ein, die von dem Kunststoff des Kunststoffkörpers 26 ausgefüllt sind. In beiden Fällen ist das Dämpferrohr 15 entlang seiner gesamten Länge undurchlässig für die Medien und auf ganzer Länge durch die Stützstruktur 27 ausgesteift. Hinsichtlich seiner Festigkeitseigenschaften ist es homogen. Die Stützstruktur 27 ist allein zum Zwecke der Verstärkung vorhanden. Sie schützt das aufgebrachte Kunststoffrohr gegen Einfallen oder Kollabieren auch bei Vorhandensein von Druckstößen.

Die insoweit beschriebene Dämpfungseinrichtung 1 arbeitet wie folgt:

In Betrieb wird das Dämpfergefäß 2 so von Medium durchflossen, dass das offene Ende 23 des Dämpferrohrs 15 gegen die ankommende Strömung angestellt ist. Gelangen nun Druckwellen in den Innenraum 3 laufen diese als Druckwelle vor allem in den Dämpferraum 21 ein und werden hier an der Ringfläche 22' reflektiert, um zurück zu laufen. Sie werden dabei gedämpft und können außerdem mit neu hereinkommenden Druckwellen interferieren. Das Dämpferrohr 15 ist hinsichtlich der Druckübertragung hart, d.h. in dem Dämpferraum 21 entlang laufende Druckwellen werden nur wenig oder nicht auf das in dem Durchgangskanal 24 fließende Medium übertragen. Es ergibt sich ein äußerst wirksamer Pulsationsdämpfer, der insbesondere niedrig frequente Pulsationen und Druckspitzen eliminiert oder signifikant dämpft.

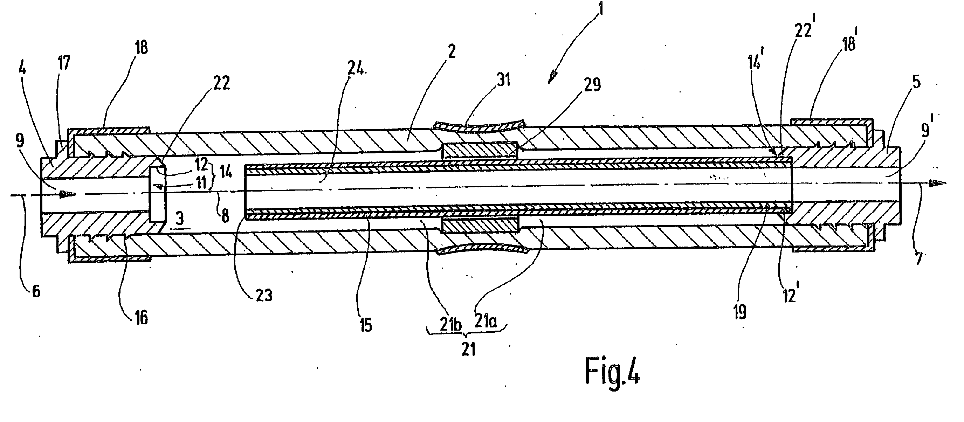

In Figur 4 ist eine abgewandelte Ausführungsform der Dämpfungseinrichtung 1 veranschaulicht. Sie stimmt weitgehend mit der Dämpfungseinrichtung 1 nach Figur 1 überein. Es wird deshalb unter Zugrundelegung gleicher Bezugszeichen auf die Beschreibung der Ausführungsform nach Figur 1 verwiesen. Von dieser unterscheidet sich die Dämpfereinrichtung 1 nach Figur 4 durch ein in dem Dämpferraum 21 angeordnetes Dämpferelement. Dieses kann beispielsweise durch eine Drosselhülse 29 gebildet sein, die an einer ausgewählten Stelle in dem Dämpferraum 21 angeordnet ist. Sie umgibt dabei das Dämpferrohr 15 konzentrisch. Es schließt mit diesem einen Ringspalt von beispielsweise einem Zehntel Millimeter radialer Dicke ein. Die Drosselhülse unterteilt den Dämpferraum 21 dadurch in zwei Dämpferteilräume 21a, 21b, die durch den mit dem Dämpferrohr 15 definierten Ringspalt akkustisch miteinander gekoppelt sind. Eine solche Drosselhülse 29 kann zur Verstärkung der Dämpferwirkung, zum Abgleich der Dämpfereinrichtung 1 sowie zur Einstellung einer gewünschten Dämpferbandbreite genutzt werden. Außerdem kommt der Drosselhülse 29 eine gewisse Stützwirkung für das Dämpferrohr 15 zu.

Die Drosselhülse 25 ist in dem Dämpfergefäß 2 beispielsweise durch eine Drosselfixierungshülse 31 gegen Axialverschiebung gesichert, die außen auf dem Schlauch sitzt. Die Drosselfixierungshülse 31 kann beispielsweise als geschlossener Ring ausgebildet sein, der das Drosselgefäß außen an der Stelle umgibt, an der die Drosselhülse 29 sitzt. Durch radiale Kompression der Drosselfixierungshülse 31 wird die Drosselhülse 29 unverschiebbar festgelegt.

Zum Einbau in Fluidsysteme, insbesondere in Hydrauliksysteme, ist eine Dämpfungseinrichtung vorgesehen, die einen Dehnschlauch 2 aufweist, in dessen Innenraum ein weitgehend starres, gegen die Strömungsrichtung ausgerichtetes Dämpferrohr 15 angeordnet ist. Das Dämpferrohr 15 weist eine vollkommen geschlossene Rohrwandung auf, was einen guten Dämpfererfolg ermöglicht. Vorzugsweise ist das Dämpferrohr 15 in Radialrichtung deutlich weniger flexibel als das äußere Dehnrohr. Dies unterstützt den Dämpfereffekt maßgeblich.

## Patentansprüche

1. Dämpfungseinrichtung (1) für ein Fluidsystem,
mit einem durch einen rohrförmigen flexiblen Körper gebildeten Dämpfergefäß (2), das einen Innenraum (3) umschließt und das einen Eingangsanschluss (4) sowie einen gegenüberliegenden Ausgangsanschluss aufweist, der durch ein Anschlussstück (5) gebildet ist, und
mit einem aus einem elastischen Material gefertigten flexiblen Dämpferrohr (15), das eine radial aussteifende Stützstruktur (27) enthält und eine geschlossene Wandung aufweist und ausgehend von dem Ausgangsanschluss (5) in den Innenraum ragt, wobei das Dämpferrohr (15) an demjenigen Anschlussstück (5) gehalten ist, an dem der Ausgangsanschluss festgelegt ist,
wobei das Dämpferrohr (15) freitragend in den Innenraum (3) ragt, so dass zwischen dem Dämpfergefäß (2) und dem Dämpferrohr (15) ein freier Ringraum (21) ausgebildet ist
wobei das Dämpferrohr (15) ein freies offenes Ende (23) aufweist, das dem Eingangsanschluss (4) gegenüberliegend angeordnet ist, und
wobei das Dämpferrohr (15) eine radiale Elastizität aufweist, die geringer ist als die radiale Elastizität des Dämpfergefäßes (2).

2. Dämpfungseinrichtung nach Anspruch 1, **dadurch gekennzeichnet, dass** das Dämpfergefäß (2) ein Zylinderrohr ist.

3. Dämpfungseinrichtung nach Anspruch 1, **dadurch gekennzeichnet, dass** das Dämpfergefäß (2) durch einen Dehnschlauch gebildet ist.

4. Dämpfungseinrichtung nach Anspruch 1, **dadurch gekennzeichnet, dass** das Dämpfergefäß (2) an seinen Enden Anschlussstücke (4, 5) aufweist, die in den rohrförmigen Körper eingesetzt sind.

5. Dämpfungseinrichtung nach Anspruch 4, **dadurch gekennzeichnet, dass** die Anschlussstücke (4, 5) untereinander gleich ausgebildet sind.

6. Dämpfungseinrichtung nach Anspruch 1, **dadurch gekennzeichnet, dass** die Länge des Innenraums (3) des Dämpfergefäßes (2) größer ist als das Zehnfache des Innendurchmessers des Dämpfergefäßes (2).

7. Dämpfungseinrichtung nach Anspruch 1, **dadurch gekennzeichnet, dass** das Dämpferrohr (15) in dem Innenraum 3) konzentrisch zu dem Dämpfergefäß (2) angeordnet ist.

8. Dämpfungseinrichtung nach Anspruch 7, **dadurch gekennzeichnet, dass** der Abstand des freien Endes (23) von dem Eingangsanschluss (4) in einem Bereich liegt, dessen untere Grenze der Innendurchmesser des Dämpfergefäßes (2) und dessen Obergrenze das Doppelte des Innendurchmessers des Dämpfergefäßes (2) ist.

9. Dämpfungseinrichtung nach Anspruch 1, **dadurch gekennzeichnet, dass** das Dämpferrohr (15) ein Kunststoffrohr ist.

10. Dämpfungseinrichtung nach Anspruch 1, **dadurch gekennzeichnet, dass** die Stützstruktur (27) in das Dämpferrohr (15) eingebettet ist.

11. Dämpfungseinrichtung nach Anspruch 1, **dadurch gekennzeichnet, dass** die Stützstruktur (27) eine schraubenförmig gewickelte Spirale ist.

12. Dämpfungseinrichtung nach Anspruch 1, **dadurch gekennzeichnet, dass** die Stützstruktur (27) eine Flachbandspirale ist.

## Claims

1. Damper device (1) for a fluid system, with a damper vessel (2) formed by a tubular flexible body which surrounds an inner chamber (3) and has an input connection (4) and an opposing output connection formed by a connection piece (5), and with a flexible damper tube (15) made of an elastic material which contains a radial supporting structure (27) and has a closed wall and starting from the output connection (5) protrudes into the inner chamber, wherein the damper tube (15) is held on the connection piece (5) to which the outlet connection is attached, wherein the damper tube (15) protrudes self-supporting into the inner chamber (3) so that between the damper vessel (2) and the damper tube (15) is formed a free annular chamber (21), where the damper tube (15) has a free open end (23) that is arranged opposite the input connection (4), and wherein the damper tube (15) has a radial elasticity which is less than the radial elasticity of the damper vessel (2).

2. Damping device according to claim 1, **characterised in that** the damper vessel (2) is a cylindrical tube.

3. Damper device according to claim 1, **characterised in that** the damper vessel (2) is formed by an expansion hose.

4. Damper device according to claim 1, **characterised in that** the damper vessel (2) at its ends has connection pieces (4, 5) that are inserted in the tubular body.

5. Damper device according to claim 4, **characterised in that** the connection pieces (4, 5) are identical in form.

6. Damper device according to claim 1, **characterised in that** the length of the inner chamber (3) of the damper vessel (2) is greater than ten times the internal diameter of the damper housing (2).

7. Damper device according to claim 1, **characterised in that** the damper tube (15) is arranged in the inner chamber (3) concentric to the damper vessel (2).

8. Damper device according to claim 7, **characterised in that** the distance of the free end (23) from the input connection (4) lies in an range whose lower limit is the inner diameter of the damper housing (2) and whose upper limit is twice the inner diameter of the damper housing (2).

9. Damper device according to claim 1, **characterised in that** the damper tube (15) is a plastic tube.

10. Damper device according to claim 1, **characterised in that** the supporting structure (27) is embedded in the damper tube (15).

11. Damper device according to claim 1, **characterised in that** the supporting structure (27) is a helically wound spiral.

12. Damper device according to claim 1, **characterised in that** the supporting structure (27) is a flat strip spiral.

## Revendications

1. Amortisseur (1) pour un système hydraulique,
avec un réceptacle d'amortisseur (2) constitué d'un corps flexible en forme de tube qui entoure un espace interne (3) et qui présente un raccordement d'entrée (4), ainsi qu'un raccordement de sortie opposé qui est constitué d'un embout (5), et ,
avec un tube d'amortisseur (15) flexible constitué d'un matériau élastique, qui comprend une structure de soutien (27) agissant comme un renfort de manière radiale et qui présente une paroi fermée et est en saillie depuis le raccordement de sortie (5) dans l'espace interne, le tube d'amortisseur (15) étant maintenu au niveau de l'embout (5) auquel le raccordement de sortie est fixé,
le tube d'amortisseur (15) étant en saillie de manière indépendante dans l'espace interne (3) de sorte que, entre le réceptacle d'amortisseur (2) et le tube d'amortisseur (15), un espace annulaire libre (21) soit formé,
le tube d'amortisseur (15) présentant une extrémité ouverte libre (23) qui est agencée à l'opposé du raccordement d'entrée (4), et
le tube d'amortisseur (15) présentant une élasticité radiale qui est inférieure à l'élasticité radiale du réceptacle d'amortisseur (2).

2. Amortisseur selon la revendication 1, **caractérisé en ce que** le réceptacle d'amortisseur (2) est un tube cylindrique.

3. Amortisseur selon la revendication 1, **caractérisé en ce que** le réceptacle d'amortisseur (2) est constitué d'un tube expansible.

4. Amortisseur selon la revendication 1, **caractérisé en ce que** le réceptacle d'amortisseur (2) présente au niveau de ses extrémités des embouts (4, 5) qui sont installés dans le corps en forme de tube.

5. Amortisseur selon la revendication 4, **caractérisé en ce que** les embouts (4, 5) sont conçus de manière identique l'un par rapport à l'autre.

6. Amortisseur selon la revendication 1, **caractérisé en ce que** la longueur de l'espace interne (3) du réceptacle d'amortisseur (2) est dix fois plus grande que le diamètre interne du réceptacle d'amortisseur (2).

7. Amortisseur selon la revendication 1, **caractérisé en ce que** le tube d'amortisseur (15) est agencé de manière concentrique par rapport au réceptacle d'amortisseur (2) dans l'espace interne (3).

8. Amortisseur selon la revendication 7, **caractérisé en ce que** l'intervalle entre l'extrémité libre (23) et le raccordement d'entrée (4) se trouve dans une plage dont la limite inférieure est le diamètre interne du réceptacle d'amortisseur (2) et dont la limite supérieure est le double du diamètre interne du réceptacle d'amortisseur (2).

9. Amortisseur selon la revendication 1, **caractérisé en ce que** le tube d'amortisseur (15) est un tube en matière plastique.

10. Amortisseur selon la revendication 1, **caractérisé en ce que** la structure de soutien (27) est encastrée dans le tube d'amortisseur (15).

11. Amortisseur selon la revendication 1, **caractérisé en ce que** la structure de soutien (27) est une spirale enroulée à la manière d'une vis.

12. Amortisseur selon la revendication 1, **caractérisé en ce que** la structure de soutien (27) est une spirale en bande plate.
